# EUROPÄISCHE PATENTSCHRIFT

(11) **EP 3 826 885 B1**
(45) Veröffentlichungstag und Bekanntmachung des Hinweises auf die Patenterteilung: **24.05.2023**
(21) Anmeldenummer: 19742571.3
(22) Anmeldetag: 18.07.2019
(51) Int. Cl.: B60N 2/16, B60N 2/68, B60N 2/02

(54) **FAHRZEUGSITZ**
VEHICLE SEAT
SIÈGE DE VÉHICULE

(30) Priorität: 25.07.2018 DE 102018117927
(43) Veröffentlichungstag der Anmeldung: 02.06.2021
(73) Patentinhaber: KEIPER Seating Mechanisms Co., Ltd., Shanghai, 201315 (CN)
(72) Erfinder: MUEHLENBROCK, Ludger, 45665 Recklinghausen (DE)
(74) Vertreter: Kutzenberger Wolff & Partner
(86) Internationale Anmeldenummer: PCT/EP2019/069441
(87) Internationale Veröffentlichungsnummer: WO 2020/020754

(56) Entgegenhaltungen:
- DE-A1-102015 223 485
- DE-B3-102007 062 358

## Beschreibung

Die Erfindung betrifft einen Fahrzeugsitz aufweisend eine Einstellkinematik mit beweglichen Schwingen, wobei wenigstens eine Schwinge um eine Achse drehbar gelagert ist und ein mit der wenigstens einen Schwinge verbundenes Zahnsegment vorgesehen ist, wobei der Fahrzeugsitz einen Antrieb zur Bewegung der wenigstens einen Schwinge aufweist und der Antrieb an einem Sitzrahmen, insbesondere an einem Seitenteil des Sitzrahmens, montiert ist, wobei ein Ritzel des Antriebs mit dem Zahnsegment in Zahneingriff ist.

### Stand der Technik

Sowohl für Fahrzeugsitz-Höheneinsteller als auch für Lehneneinsteller sind Antriebsvorrichtungen zur Bedienung bzw. Einstellung der Sitzfunktion bekannt. Hierbei handelt es sich häufig um elektrische Antriebe oder mechanische, bidirektionale Schrittschaltwerke, deren Betätigungswinkel in aller Regel 15° bis 30° beträgt, und die nur die jeweilige Betätigungsrichtung weiterleiten und auf dem Rückweg vom Abtrieb entkoppelt werden. Derartige Mechanismen sind als lastaufnehmende Systeme in Höheneinstellern üblich. Bei der Anwendung als Lehneneinsteller übernimmt in der Regel der angetriebene, als Getriebebeschlag ausgebildete, Lehnenbeschlag die Gebrauchslasten und Crashlasten. Bekannte Antriebsvorrichtungen sind beispielsweise in der DE 197 09 852 A1 und DE 195 40 631 A1 offenbart.

Eine durch Benutzung bekannte Antriebsvorrichtung umfasst ein Ritzel, das mit einer Verzahnung einer Höheneinstellkinematik des Fahrzeugsitzes in Zahneingriff ist, wobei die Antriebsvorrichtung an einem Strukturteil des Fahrzeugsitzes befestigt ist. Während der Montage der Antriebsvorrichtung wird diese vom Monteur in Richtung des Zahneingriffs gedrückt und zunächst manuell in dieser Position gehalten. Der Monteur kann die Antriebseinrichtung erst dann wieder loslassen, wenn er die Lage der Antriebsvorrichtung relativ zu dem Strukturteil mittels mehrerer Schrauben gesichert hat. Bei Unaufmerksamkeiten während des Montageprozesses kann sich die Lage der Antriebsvorrichtung wieder verschieben, bevor die Schrauben vollständig angezogen sind.

Aus der DE 10 2015 223 485 A1 ist ein Höheneinsteller für einen Fahrzeugsitz bekannt, wobei eine Ausrichtung einer an einem Seitenteil montierten und einen Antrieb haltenden Grundplatte relativ zum Seitenteil des Fahrzeugsitzes mittels eines Crashbolzens erfolgt.

Aus der DE 10 2016 122 439 A1 ist eine Sitzhöhen-Verstellvorrichtung für einen Fahrzeugsitz bekannt, welche ein durch eine Antriebswelle drehbares Antriebsritzel und ein Verstellelement aufweist, wobei das Verstellelement zur Sitzhöhenverstellung schwenkbar ist und einen bogenförmigen Führungsschlitz und ein Zahnsegment aufweist, wobei das Antriebsritzel mit dem Zahnsegment in Eingriff ist. Hierbei ist eine Führungseinrichtung zur Kopplung des Antriebsritzels mit dem Zahnsegment vorgesehen, wobei das Antriebsritzel an der Führungseinrichtung gelagert ist, wobei die Führungseinrichtung mit einem Führungsstift in dem Führungsschlitz geführt ist und die Führungseinrichtung relativ zu dem Verstellelement zur Verringerung einer Toleranz oder eines Spiels verstellbar ist.

Ein weiterer Höheneinsteller für einen Fahrzeugsitz ist aus der DE 10 2007 062 358 B3 bekannt.

Einzelteiltoleranzen und Montageungenauigkeiten bedingen die Gefahr einer nicht ordnungsgemäßen Lage der Verzahnungen von Ritzel und Höheneinstellkinematik zueinander. Liegen die Verzahnungen zu dicht aneinander, wird die Montage erschwert. Spiel zwischen den Verzahnungen kann hingegen zu Geräuschen führen und vermindert die über die Zahneingriffsstelle übertragbaren Kräfte.

### Aufgabe

Der Erfindung liegt die Aufgabe zu Grunde, einen Fahrzeugsitz mit einer Antriebsvorrichtung der eingangs genannten Art zu verbessern, insbesondere einen spielarmen oder spielfreien Zahneingriff zwischen einem Ritzel der Antriebsvorrichtung und einer Verzahnung einer Einstellkinematik, insbesondere einer Höheneinstellkinematik, des Fahrzeugsitzes zu ermöglichen und eine Geräuschentwicklung der Einstellkinematik und der Antriebsvorrichtung zu verringern.

### Lösung

Diese Aufgabe wird erfindungsgemäß durch einen Fahrzeugsitz gelöst, der die technischen Merkmale des Anspruchs 1 aufweist.

Dadurch, dass durch eine Ausrichtung der Position des gesamten Antriebs relativ zum Seitenteil mittels eines Ausgleichskörpers das Ritzel relativ zum Zahnsegment spielfrei gestellt ist, werden fertigungsbedingte Toleranzen innerhalb der Einstellkinematik während der Montage eliminiert, was insbesondere Störgeräusche während des späteren Einsatzes des Fahrzeugsitzes verhindert.

Vorteilhafte Ausgestaltungen, welche einzeln oder in Kombination miteinander eingesetzt werden können, sind nachfolgend beschrieben und/oder Gegenstand der Unteransprüche.

Der Ausgleichskörper kann einen Stützabschnitt mit einer Fase aufweisen. Die Fase kann eine Montage der Einstellkinematik erleichtern. An einer in Richtung des Zahnsegments orientierten Oberfläche des Ausgleichskörpers können Rippen vorgesehen sein. An einer in Richtung des Zahnsegments orientierten Oberfläche des Stützabschnitts des Ausgleichskörpers können Rippen vorgesehen sein. Die Rippen können für eine geringere Kontaktfläche zum Zahnsegment sorgen, und hierdurch einen Reibungswiderstand verringern.

Der Ausgleichskörper kann sich an einem vom Ritzel aus betrachtet hinter dem Zahnsegment angeordneten Crashbolzen abstützen. Der Ausgleichskörper kann aus einem Kunststoff gefertigt sein.

Das Ritzel des Antriebs kann unter Bildung eines Spaltes durch eine Öffnung des Seitenteils geführt sein. Das Seitenteil kann eine Durchgangsbohrung und zwei Langlöcher aufweisen. Der Antrieb kann mittels eines ersten Gewindebolzens in der Durchgangsbohrung und mittels zwei weiterer Gewindebolzen in je einem der zwei Langlöcher an dem Seitenteil montiert sein. Die zwei Langlöcher sind in ihrer jeweiligen Ausrichtung bevorzugt parallel ausgerichtet. Die zwei Langlöcher sind in ihrer jeweiligen Längsausdehnung bevorzugt parallel zu einer gedachten Verbindungslinie des Durchtrittspunkts der Achse des Querrohres in dem Seitenteil und des Durchtrittspunkts der Achse des Ritzels in dem Seitenteil ausgerichtet. Die Durchgangsbohrung kann ein ausreichendes Spiel für den ersten Gewindebolzen aufweisen, so dass die beiden weiteren Gewindebolzen entlang einer Längsausdehnung der Langlöcher beweglich sind.

Der Antrieb kann ein Schrittschaltgetriebe aufweisen. Der Antrieb kann einen Getriebemotor aufweisen.

### Figuren und Ausführungsformen der Erfindung

Im Folgenden ist die Erfindung anhand eines in den Figuren dargestellten vorteilhaften Ausführungsbeispiels sowie einer Abwandlung des Ausführungsbeispiels näher erläutert. Die Erfindung ist jedoch nicht auf dieses Ausführungsbeispiel oder dessen Abwandlung beschränkt. Es zeigen:
- Fig. 1:: eine schematische Darstellung eines erfindungsgemäßen Fahrzeugsitzes, gemäß des Ausführungsbeispiels,
- Fig. 2:: eine Seitenansicht auf ein Seitenteil des Fahrzeugsitzes von Fig. 1 und ein Schrittschaltgetriebe als Antrieb,
- Fig. 3:: eine ausschnittsweise Schnittdarstellung des Seitenteils und des Schrittschaltgetriebes von Fig. 2,
- Fig. 4:: eine Seitenansicht auf ein Seitenteil mit einem Getriebemotor als Antrieb, gemäß der Abwandlung des Ausführungsbeispiels,
- Fig. 5:: eine ausschnittsweise Schnittdarstellung des Seitenteils und des Getriebemotors von Fig. 4,
- Fig. 6:: eine perspektivische Ansicht eines Abschnitts des Seitenteils,
- Fig. 7:: eine perspektivische Ansicht einer Schwinge mit einem Zahnsegment einer Höheneinstellkinematik,
- Fig. 8:: eine perspektivische Ansicht eines Ausschnitts der Höheneinstellkinematik in einem ersten Montagezustand,
- Fig. 9:: eine Seitenansicht der Höheneinstellkinematik in dem ersten Montagezustand von Fig. 8,
- Fig. 10:: eine perspektivische Ansicht des Ausschnitts der Höheneinstellkinematik von Fig. 8 in einem zweiten Montagezustand,
- Fig. 11:: eine Seitenansicht des Ausschnitts der Höheneinstellkinematik von Fig. 8 in einem dritten Montagezustand,
- Fig. 12:: eine Schnittdarstellung einer Brücke mit einem Ausgleichskörper,
- Fig. 13:: eine perspektivische Ansicht der Brücke von Fig. 12 mit dem Ausgleichskörper,
- Fig. 14:: eine perspektivische Ansicht des Ausgleichskörpers,
- Fig. 15:: eine perspektivische Ansicht der Brücke, des Ausgleichskörpers, des Zahnsegments und des Ritzels, und
- Fig. 16:: eine Schnittdarstellung des Seitenteils von Fig. 5.

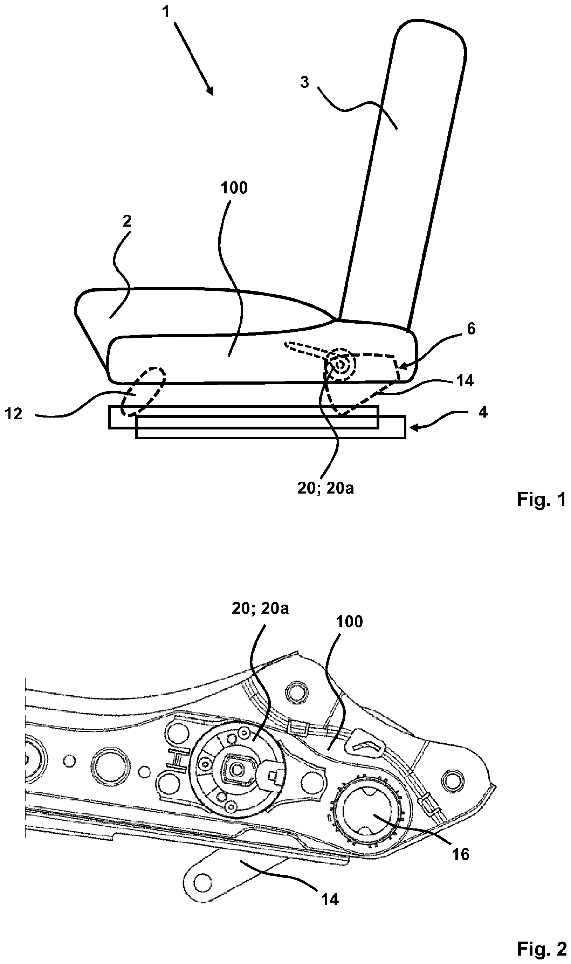

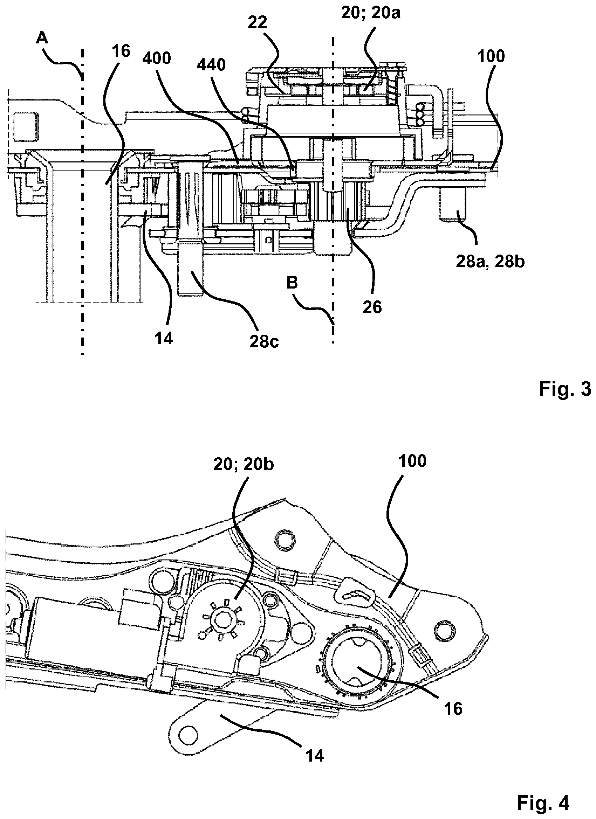

In Fig. 1 ist ein Fahrzeugsitz 1, insbesondere ein Kraftfahrzeugsitz, mit einer einen Antrieb 20 aufweisenden Einstellkinematik, vorliegend einer Höheneinstellkinematik 6, dargestellt. Der Fahrzeugsitz 1 weist ein Sitzteil 2 und eine Lehne 3 auf, wobei das Sitzteil 2 einen Sitzrahmen umfasst. Der Sitzrahmen weist zwei gegenüberliegende Seitenteile 100 auf. Der Fahrzeugsitz 1 ist mittels wenigstens eines Längseinstellers 4 in Längsrichtung verschiebbar mit einer Fahrzeugstruktur verbindbar. Der Antrieb 20 ist als ein Schrittschaltgetriebe 20a mit einem Hebel ausgebildet. Ein solches Schrittschaltgetriebe 20a ist beispielsweise aus der DE 10 2009 014 651 A1 bekannt. In einer Abwandlung des Ausführungsbeispiels ist der Antrieb 20, wie in den Figuren 4, 5 und 16 gezeigt, als ein Getriebemotor 20b ausgestaltet, welcher beispielsweise aus der DE 197 09 852 A1 bekannt ist. Bis auf den Antrieb 20 unterscheiden sich das Ausführungsbeispiel und dessen Abwandlung nicht voneinander.

Zur Einstellung der Höhe des Sitzrahmens des Fahrzeugsitzes 1 relativ zu der Fahrzeugstruktur weist die Höheneinstellkinematik 6 auf beiden Seiten des Fahrzeugsitzes 1 zwei bewegliche Schwingen 12, 14 und jeweils ein Seitenteil 100 auf. Das Seitenteil 100 ist jeweils mit einer vorderen Schwinge 12 und einer hinteren Schwinge 14 verbunden. Die vorderen Schwingen 12 sind jeweils an den Seitenteilen 10 sowie an dem Längseinsteller 4 gelagert. Die hinteren Schwingen 14 sind um eine Achse A eines Querrohres 16 drehbar gelagert. Die hinteren Schwingen 14 sind an dem Längseinsteller 4 drehbar gelagert. Alternativ zum Längseinsteller 4 kann ebenso eine Lagerung der vorderen Schwingen 12 und der hinteren Schwingen 14 an einer Basis oder unmittelbar an der Fahrzeugstruktur vorgesehen sein.

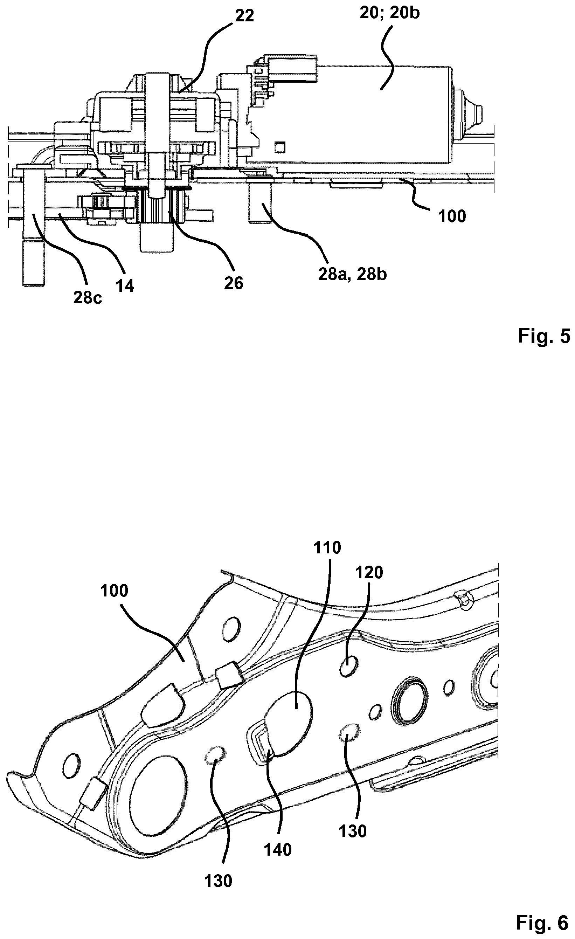

Fig. 2 zeigt das Seitenteil 100 mit dem Antrieb 20 in Form eines Schrittschaltgetriebes 20a des Ausführungsbeispiels. Fig. 3 zeigt eine ausschnittsweise Schnittdarstellung des Seitenteils 100 von Fig. 2. In Fig. 4 ist das Seitenteil 100 mit dem Antrieb 20 in Form eines Getriebemotors 20b der Abwandlung des Ausführungsbeispiels dargestellt, welcher zudem in einer ausschnittsweisen Schnittdarstellung in Fig. 5 gezeigt ist. Die beiden Ausführungen des Antriebs 20 unterscheiden sich lediglich in ihrer Art der Bedienung und einer Erzeugung einer Drehbewegung eines jeweiligen abtriebsseitigen Ritzels 26.

Nachfolgend sind weitere Merkmale des Antriebs 20 und des Ritzels 26 in Verbindung mit weiteren Bauteilen beschrieben. Sofern nicht explizit abweichend beschrieben kann das Ritzel 26 Bestandteil des Antriebs 20 in Form sowohl des Schrittschaltgetriebes 20a, als auch des Getriebemotors 20b sein. Abtriebsseitig weist der Antrieb 20 ein an einer Antriebswelle 24 angeordnetes Ritzel 26 auf, welches um eine Achse B des Ritzels 26 rotierbar ist. Der Antrieb 20 weist ferner eine Grundplatte 400 auf, mittels welcher der Antrieb 20 an dem Seitenteil 100 befestigbar ist. Der Antrieb 20 weist ein Gehäuse 22 auf.

Fig. 6 zeigt einen Abschnitt des Seitenteils 100, aufweisend eine Öffnung 110 zur Durchführung des Ritzels 26 des Antriebs 20. Das Seitenteil 100 weist ferner eine Durchgangsbohrung 120 sowie zwei Langlöcher 130 auf.

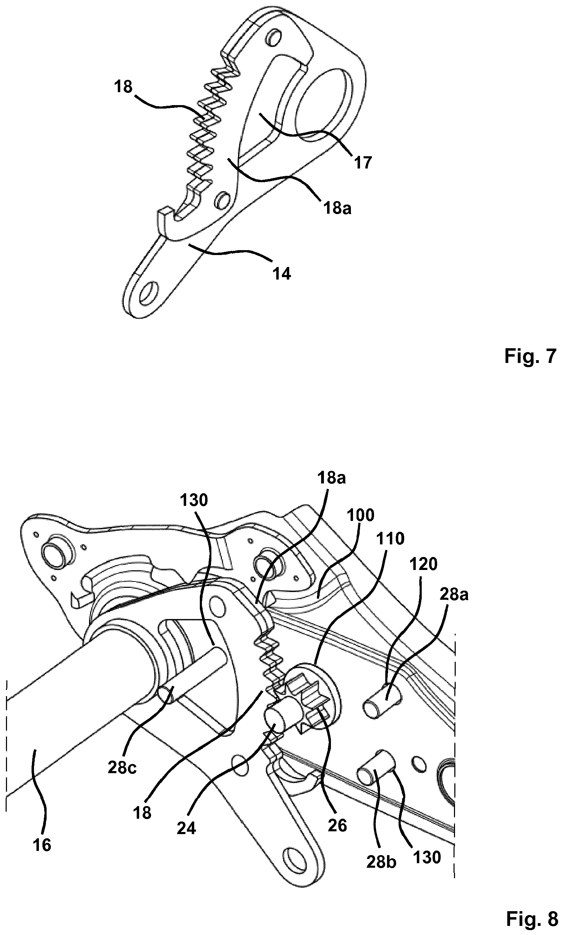

Fig. 7 zeigt ein Zahnsegment 18, welches vorliegend integral mit der hinteren Schwinge 14 ausgestaltet ist. Das Zahnsegment 18 kann alternativ ebenfalls zweiteilig mit der hinteren Schwinge 14 ausgestaltet sein. Das Zahnsegment 18 ist im Bereich einer Verzahnung mittels eines weiteren Zahnabschnitts 18a verstärkt. Die Verzahnung des Zahnsegments 18 ist mit einer Verzahnung des Weiteren Zahnabschnitts 18a fluchtend ausgerichtet.

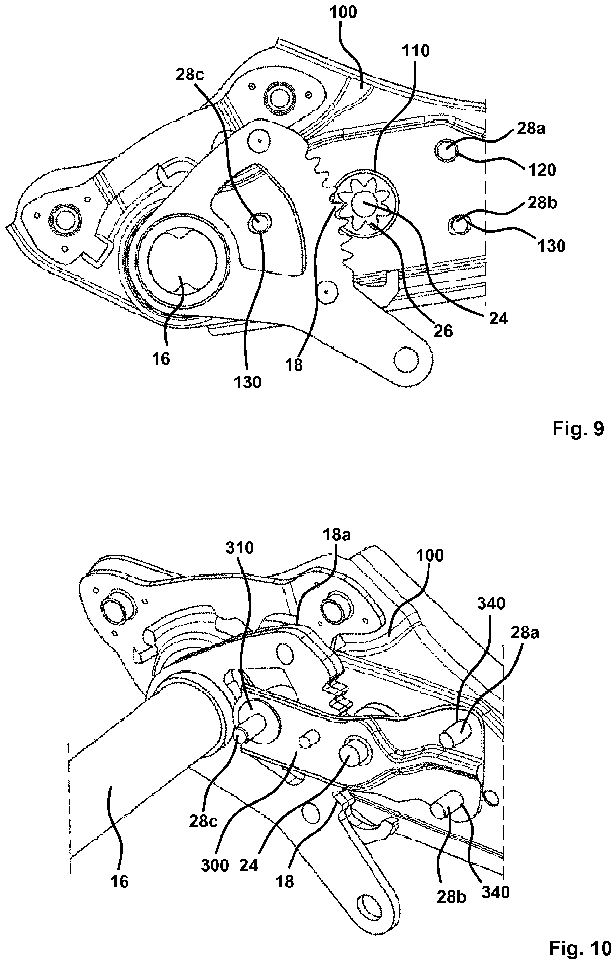

Die Figuren 8 und 9 zeigen einen Ausschnitt der Höheneinstellkinematik 6 in einem ersten Montagezustand. Die hintere Schwinge 14 ist um eine Achse A des Querrohres 16 drehbar gelagert. Die hintere Schwinge 14 umgreift das Querrohr 16. Die hintere Schwinge 14 ist an dem Querrohr 16 fixiert. Die hintere Schwinge 14 ist bevorzugt mit dem Querrohr 16 verschweißt. Das Ritzel 26 des Antriebs 20 ragt von einer dem Zahnsegment 18 gegenüberliegenden Seite des Seitenteils 100 durch die Öffnung 110 hindurch. Das Ritzel 26 ist mit dem Zahnsegment 18 in Eingriff. Ferner weist der Antrieb 20 drei Gewindebolzen 28a, 28b, 28c auf, welche jeweils durch die Durchgangsbohrung 120 oder eines der Langlöcher 130 hindurchgeführt sind. Während der die Durchgangsbohrung 120 durchragende Gewindebolzen 28a sowie das in der Öffnung 110 angeordnete Ritzel 26 rundum spielbehaftet sind, sind die beiden in den Langlöchern 130 angeordneten Gewindebolzen 28b, 28c entlang einer Längsausdehnung der Langlöcher 130 beweglich geführt. Die beiden Langlöcher 130 weisen im Wesentlichen lediglich entlang ihrer jeweiligen Längsausdehnung ein Spiel auf. Senkrecht zur Längsausdehnung der Langlöcher 130 sind die zwei weiteren Gewindebolzen 28b, 28c im Wesentlichen spielfrei gehalten.

Fig. 10 zeigt den Ausschnitt der Höheneinstellkinematik 6 in einem zweiten Montagezustand. Im Unterschied zu den Figuren 8 und 9 wurde eine Brücke 300 mit einem Ausgleichskörper 200 auf die freien Enden der Gewindebolzen 28a, 28b, 28c sowie der Antriebswelle 24 aufgeschoben.

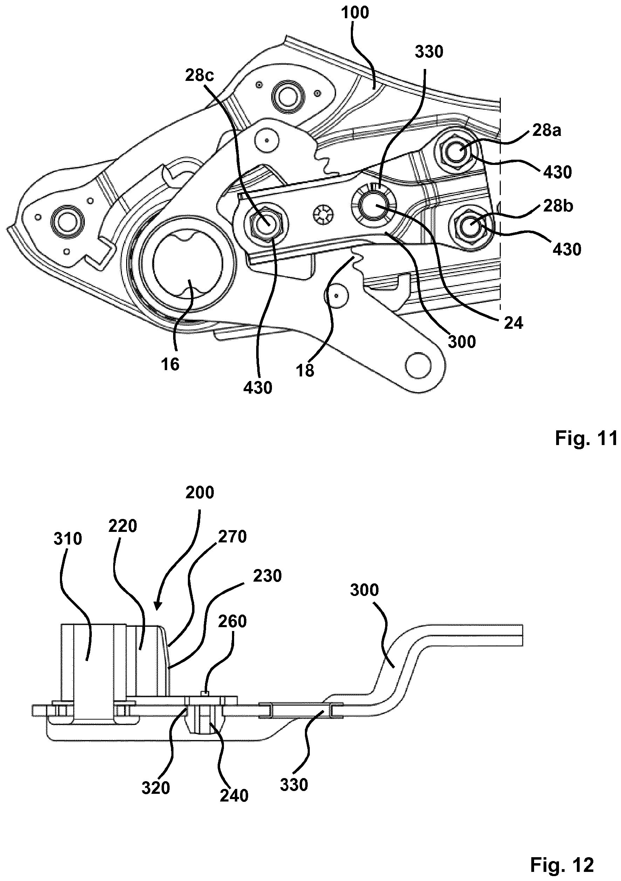

In dem in Fig. 11 gezeigten dritten Montagezustand der Höheneinstellkinematik 6 ist die Brücke 300 mit auf den Gewindebolzen 28a, 28b, 28c aufgeschraubten Muttern 430 gesichert.

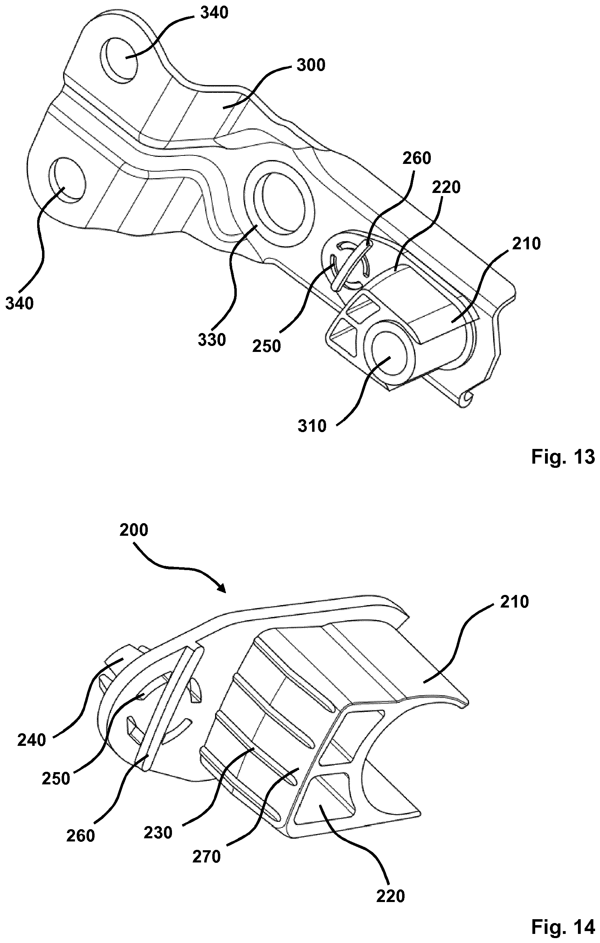

Fig. 12 zeigt die Brücke 300 mit dem Ausgleichskörper 200 in einer Schnittdarstellung, wohingegen Fig. 13 die Brücke 300 mit dem Ausgleichskörper 200 in einer perspektivischen Ansicht zeigt. Fig. 14 zeigt eine perspektivische Ansicht des Ausgleichskörpers 200.

Die Brücke 300 ist vorliegend mit einer Abstandshülse 310 verbunden, kann jedoch auch einteilig mit der Abstandshülse 310 ausgestaltet sein. Die Abstandshülse 310 ist an der Brücke 300 fixiert, insbesondere angenietet, vorzugsweise holvernietet. Der Ausgleichskörper 200 weist einen Halteabschnitt 210 auf, welcher die Abstandshülse 310 wenigstens teilweise umgreift. Der Ausgleichskörper 200 weist ferner einen Stützabschnitt 220 auf, welcher abschnittsweise eine Fase 270 zur leichteren Montage aufweist. Der Ausgleichskörper 200 weist ferner Rippen 230 auf. Die Rippen 230 erstrecken sich über den Stützabschnitt 220 und die Fase 270. Die Rippen 230 werden durch die Montage geringfügig deformiert, insbesondere plastisch oder elastisch deformiert. Die Rippen 230 können durch ein Aufschieben auf das Zahnsegment 18 geringfügig abgeschabt sein.

Die hintere Schwinge 14 weist zwischen dem Zahnsegment 18, insbesondere zwischen dem Zahnabschnitt 18a und einem Verbindungsbereich mit dem Querrohr 16, eine Öffnung 17 auf. In montiertem Zustand ist die Abstandshülse 310 zusammen mit dem Ausgleichskörper 200, insbesondere dem Stützabschnitt 220 des Ausgleichskörpers 200, durch die Öffnung 17 der hinteren Schwinge 14 hindurchgeführt. In montiertem Zustand liegen die Rippen 230 an einer von der Verzahnung des Zahnsegments 18 beabstandeten Rückseite spielfrei an.

Der Ausgleichskörper 200 ist mittels wenigstens eines Clipses 240, vorliegend mehrerer Clipse 240, in einer Halteöffnung 320 der Brücke 300 eingeclipst. Durch den Clips 240 ist ein Verdrehen des Ausgleichskörpers 200 um die Abstandshülse 310 verhindert. Im Bereich des Clips 240 sind Schlitze 250 in dem Ausgleichskörper 200 vorgesehen. Auf einer der Brücke 300 abgewandten Seite des Ausgleichskörpers 200 ist im Bereich des Clips 240 ein Steg 260 angeordnet, welcher den Ausgleichskörper 200 im Bereich des Clips 240 verstärkt. Der Steg 260 kann ferner als Abstandshalter für das Zahnsegment 18 dienen. Die Brücke 300 weist ferner ein Lagerelement 330 auf, welches insbesondere mittels eines sogenannten NORGLIDEO Lagers gebildet sein kann. In montiertem Zustand ist die Antriebswelle 24 bevorzugt spielfrei in dem Lagerelement 330 gelagert. Die Brücke 300 weist ferner zwei Befestigungsöffnungen 340 auf, welche zur Fixierung an den Gewindebolzen 28a, 28b dienen. Die Befestigungsöffnungen 340 weisen in montiertem Zustand ein radiales Spiel relativ zu den Gewindebolzen 28a, 28b auf.

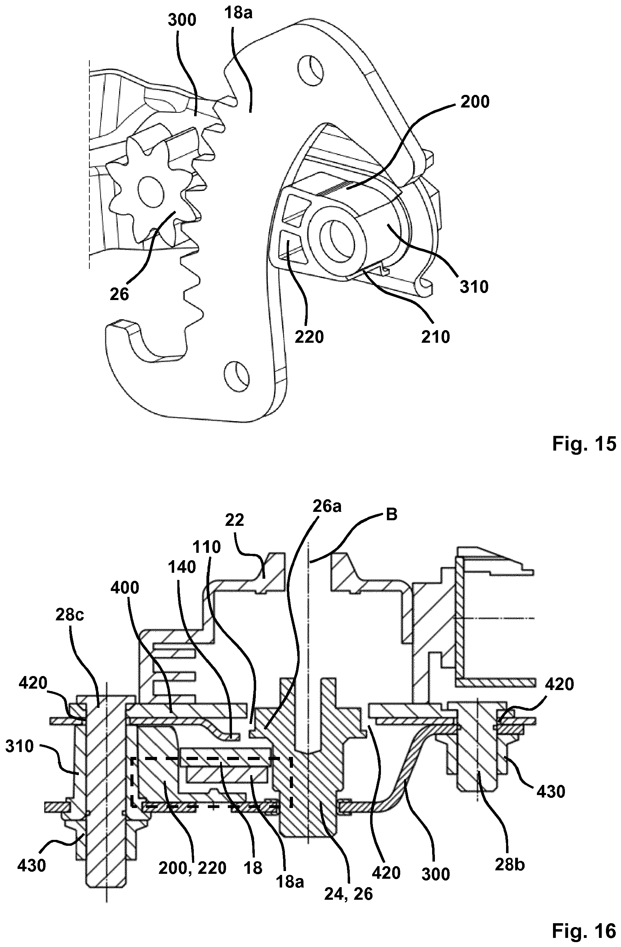

Fig. 15 zeigt eine perspektivische Ansicht der Brücke 300, des Ausgleichskörpers 200, des Zahnabschnitts 18a und des Ritzels 26.

Fig. 16 zeigt eine Schnittdarstellung des Seitenteils 100 von Fig. 2 mit der vollständig montierten Höheneinstellkinematik 6. Das Seitenteil 100 weist im Bereich der Öffnung 110 für das Ritzel 26 einen Vorsprung 140 auf. Der Vorsprung 140 verhindert einen Kontakt des Zahnabschnitts 18a zu einem Basisabschnitt 26a des Ritzels 26 im Falle einer Belastung aufgrund eines Unfalls.

Der Antrieb 20 ist über die Grundplatte 400 derart mit dem Seitenteil 100 des Sitzrahmens verbunden, dass das Ritzel 26 des Antriebs 20 mit dem Zahnsegment 18 spielfrei in Eingriff ist. Das Ritzel 26 des Antriebs 20 ist unter Bildung eines geschlossenen Kräftesystems mittels der Brücke 300 und der Abstandshülse 310 an dem Seitenteil 100 gesichert. Unter dem geschlossenen Kräftesystem ist allgemein das gestrichelt dargestellte geschlossene System zwischen der Grundplatte 400, der Abstandshülse 310, der Brücke 300 und dem Ritzel 26, bzw. eines Abschnitts der Antriebswelle 24 des Ritzels 26, bezeichnet, wobei dieses geschlossene System einen geschlossenen Kraftfluss entlang der in Fig. 16 gestrichelt dargestellten Linie aufweist. Eine spielfreie Ausrichtung des Ritzels 26 zum Zahnsegment 18 erfolgt durch eine Ausrichtung der Position der montierten Grundplatte 400 relativ zum Seitenteil 100 mittels des Ausgleichskörpers 200. Vorliegend richtet die Abstandshülse 310 mittels des Ausgleichskörpers 200 das Ritzel 26 über die Brücke 300 relativ zum Zahnsegment 18 aus. Die Grundplatte 400 sowie der Antrieb 20 folgt dieser Ausrichtung des Ritzels 26 relativ zum Zahnsegment 18. Zum Abschluss der Montage des Antriebs 20 an dem Seitenteil 100 wird die Grundplatte 400 in ausgerichtetem Zustand mittels der Muttern 430 und der Gewindebolzen 28a, 28b, 28c relativ zum Seitenteil 100 fixiert. Um ein Überbestimmen des geschlossenen Systems zu vermeiden sind die Gewindebolzen 18b, 18c in den Langlöchern 130 sowie ein in der Grundplatte 400 geformter der Kragenzug 440 unter Bildung eines Spaltes 420 durch die Öffnung 110 des Seitenteils 100 hindurchgeführt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, solange der resultierende Gegenstand zum Schutzumfang gehört, der durch die Ansprüche definiert ist.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 3: Lehne
- 4: Längseinsteller
- 6: Höheneinstellkinematik
- 12: vordere Schwinge
- 14: hintere Schwinge
- 16: Querrohr
- 17: Öffnung
- 18: Zahnsegment
- 18a: Zahnabschnitt
- 20: Antrieb
- 20a: Schrittschaltgetriebe
- 20b: Getriebemotor
- 22: Gehäuse
- 24: Antriebswelle
- 26: Ritzel
- 26a: Basisabschnitt
- 28a: Gewindebolzen
- 28b: Gewindebolzen
- 28c: Gewindebolzen
- 100: Seitenteil
- 110: Öffnung
- 120: Durchgangsbohrung
- 130: Langloch
- 140: Vorsprung
- 200: Ausgleichskörper
- 210: Halteabschnitt
- 220: Stützabschnitt
- 230: Rippe
- 240: Clip
- 250: Schlitz
- 260: Steg
- 270: Fase
- 300: Brücke
- 310: Abstandshülse
- 320: Halteöffnung
- 330: Lagerelement
- 340: Befestigungsöffnung
- 400: Grundplatte
- 420: Spalt
- 430: Mutter
- 440: Kragenzug
- A: Achse (des Querrohres)
- B: Achse (des Ritzels)

## Patentansprüche

1. Fahrzeugsitz (1) aufweisend eine Einstellkinematik mit beweglichen Schwingen (12, 14), wobei wenigstens eine Schwinge (14) um eine Achse (A) drehbar gelagert ist und ein mit der wenigstens einen Schwinge (14) verbundenes Zahnsegment (18) vorgesehen ist, wobei der Fahrzeugsitz (1) einen Antrieb (20) zur Bewegung der wenigstens einen Schwinge (14) aufweist und der Antrieb (20) an einem Sitzrahmen montiert ist, wobei ein Ritzel (26) des Antriebs (20) mit dem Zahnsegment (18) in Zahneingriff ist,
wobei
durch eine Ausrichtung der Position des gesamten Antriebs (20) relativ zu einem Seitenteil (100) des Sitzrahmens mittels eines Ausgleichskörpers (200) das Ritzel (26) relativ zum Zahnsegment (18) spielfrei gestellt ist, wobei das Ritzel (26) des Antriebs (20) mittels einer Brücke (300) und einer Abstandshülse (310) unter Bildung eines geschlossenen Kräftesystems an dem Seitenteil (100) gesichert ist, **dadurch gekennzeichnet, dass** der Ausgleichskörper (200) an der vom Ritzel (26) aus betrachtet hinter dem Zahnsegment (18) angeordneten Abstandshülse (310) abgestützt ist.

2. Fahrzeugsitz (1) gemäß Anspruch 1, wobei die Einstellkinematik eine Höheneinstellkinematik (6) ist.

3. Fahrzeugsitz (1) gemäß einem der Ansprüche 1 oder 2, wobei die Schwingen (12, 14) zur Einstellung der Höhe des Sitzrahmens des Fahrzeugsitzes (1) relativ zu einer verbindbaren Fahrzeugstruktur eingerichtet sind.

4. Fahrzeugsitz (1) gemäß einem der Ansprüche 1 bis 3, wobei die Achse (A) die Achse eines Querrohres (16) ist.

5. Fahrzeugsitz (1) gemäß einem der Ansprüche 1 bis 4, wobei der Antrieb (20) an dem Seitenteil (100) des Sitzrahmens montiert ist.

6. Fahrzeugsitz (1) gemäß einem der Ansprüche 1 bis 5, wobei der Ausgleichskörper (200) einen Halteabschnitt (210) aufweist, welcher die Abstandshülse (310) wenigstens teilweise umgreift.

7. Fahrzeugsitz (1) gemäß einem der Ansprüche 1 bis 6, wobei der Ausgleichskörper (200) einen Stützabschnitt (220) mit einer Fase (270) aufweist.

8. Fahrzeugsitz (1) gemäß einem der Ansprüche 1 bis 7, wobei an einer in Richtung des Zahnsegments (18) orientierten Oberfläche des Ausgleichskörpers (200) wenigstens eine Rippe (230) vorgesehen ist.

9. Fahrzeugsitz (1) gemäß den Ansprüchen 7 und 8, wobei die wenigstens eine Rippe (230) sich über den Stützabschnitt (220) und die Fase (270) erstreckt.

10. Fahrzeugsitz (1) gemäß Anspruch 8 oder 9, wobei in montiertem Zustand die zumindest eine Rippe (230) an einer von einer Verzahnung des Zahnsegments (18) beabstandeten Rückseite spielfrei anliegt.

11. Fahrzeugsitz (1) gemäß einem der Ansprüche 1 bis 10, wobei der Ausgleichskörper (200) aus einem Kunststoff gefertigt ist.

12. Fahrzeugsitz (1) gemäß einem der Ansprüche 1 bis 11, wobei das Ritzel (26) des Antriebs (20) unter Bildung eines Spaltes (420) durch eine Öffnung (110) des Seitenteils (100) geführt ist.

13. Fahrzeugsitz (1) gemäß einem der Ansprüche 1 bis 12, wobei das Seitenteil (100) eine Durchgangsbohrung (120) und zwei Langlöcher (130) aufweist.

14. Fahrzeugsitz (1) gemäß Anspruch 13, wobei der Antrieb (20) mittels eines Gewindebolzens (18a) spielfrei in der Durchgangsbohrung (120) und mittels zweier weiterer Gewindebolzen (18b, 18c) in je einem der zwei Langlöcher (130) an dem Seitenteil (100) montiert ist.

15. Fahrzeugsitz (1) gemäß einem der Ansprüche 1 bis 14, wobei der Antrieb (20) ein Schrittschaltgetriebe (20a) oder einen Getriebemotor (20b) aufweist.

## Claims

1. Vehicle seat (1) having adjustment kinematics with movable rockers (12, 14), wherein at least one rocker (14) is mounted rotatably about an axis (A), and a toothed segment (18) which is connected to the at least one rocker (14) is provided, wherein the vehicle seat (1) has a drive (20) for moving the at least one rocker (14), and the drive (20) is mounted on a seat frame, wherein a pinion (26) of the drive (20) meshes with the toothed segment (18),
wherein
by aligning the position of the entire drive (20) relative to a side part (100) of the seat frame by means of a compensating body (200), the pinion (26) is positioned relative to the toothed segment (18) in a manner free from play, wherein the pinion (26) of the drive (20) is secured to the side part (100) by means of a bridge (300) and a spacer sleeve (310), thus forming a closed system of forces, **characterized in that** the compensating body (200) is supported on the spacer sleeve (310), which is arranged behind the toothed segment (18) as viewed from the pinion (26).

2. Vehicle seat (1) according to Claim 1, wherein the adjustment kinematics are height adjustment kinematics (6).

3. Vehicle seat (1) according to either of Claims 1 and 2, wherein the rockers (12, 14) are configured for adjusting the height of the seat frame of the vehicle seat (1) relative to a connectable vehicle structure.

4. Vehicle seat (1) according to one of Claims 1 to 3, wherein the axis (A) is the axis of a transverse tube (16).

5. Vehicle seat (1) according to one of Claims 1 to 4, wherein the drive (20) is mounted on the side part (100) of the seat frame.

6. Vehicle seat (1) according to one of Claims 1 to 5, wherein the compensating body (200) has a holding portion (210) which at least partially engages around the spacer sleeve (310).

7. Vehicle seat (1) according to one of Claims 1 to 6, wherein the compensating body (200) has a supporting portion (220) with a bevel (270).

8. Vehicle seat (1) according to one of Claims 1 to 7, wherein at least one rib (230) is provided on a surface of the compensating body (200) that is oriented in the direction of the toothed segment (18) .

9. Vehicle seat (1) according to Claims 7 and 8, wherein the at least one rib (230) extends over the supporting portion (220) and the bevel (270).

10. Vehicle seat (1) according to Claim 8 or 9, wherein in the mounted state, the at least one rib (230) lies in a manner free from play on a rear side which is spaced apart from the toothing of the toothed segment (18).

11. Vehicle seat (1) according to one of Claims 1 to 10, wherein the compensating body (200) is manufactured from a plastic.

12. Vehicle seat (1) according to one of Claims 1 to 11, wherein the pinion (26) of the drive (20) is guided through an opening (110) in the side part (100) with a gap (420) being formed.

13. Vehicle seat (1) according to one of Claims 1 to 12, wherein the side part (100) has a through bore (120) and two elongated holes (130).

14. Vehicle seat (1) according to Claim 13, wherein the drive (20) is mounted by means of a threaded bolt (18a) in a manner free from play in the through bore (120) and by means of two further threaded bolts (18b, 18c) in in each case one of the two elongated holes (130) on the side part (100).

15. Vehicle seat (1) according to one of Claims 1 to 14, wherein the drive (20) has a step by step transmission (20a) or a geared motor (20b).

## Revendications

1. Siège de véhicule (1) présentant une cinématique de réglage avec des bras oscillants mobiles (12, 14), au moins un bras oscillant (14) étant supporté de manière rotative autour d'un axe (A) et un segment denté (18) relié à l'au moins un bras oscillant (14) étant prévu, le siège de véhicule (1) présentant un entraînement (20) pour déplacer l'au moins un bras oscillant (14) et l'entraînement (20) étant monté sur un cadre de siège, un pignon (26) de l'entraînement (20) étant en engrènement avec le segment denté (18),
en orientant la position de l'ensemble de l'entraînement (20) par rapport à une partie latérale (100) du cadre de siège au moyen d'un corps de compensation (200), le pignon (26) étant placé sans jeu par rapport au segment denté (18), le pignon (26) de l'entraînement (20) étant fixé à la partie latérale (100) au moyen d'un pont (300) et d'une douille d'écartement (310) en formant un système de force fermé,
**caractérisé en ce que**
le corps de compensation (200) s'appuie sur la douille d'écartement (310) agencée derrière le segment denté (18), considéré depuis le pignon (26).

2. Siège de véhicule (1) selon la revendication 1, la cinématique de réglage étant une cinématique de réglage en hauteur (6).

3. Siège de véhicule (1) selon l'une quelconque des revendications 1 ou 2, les bras oscillants (12, 14) étant adaptés pour régler la hauteur du cadre de siège du siège de véhicule (1) par rapport à une structure de véhicule pouvant être reliée.

4. Siège de véhicule (1) selon l'une quelconque des revendications 1 à 3, l'axe (A) étant l'axe d'un tube transversal (16).

5. Siège de véhicule (1) selon l'une quelconque des revendications 1 à 4, l'entraînement (20) étant monté sur la partie latérale (100) du cadre de siège.

6. Siège de véhicule (1) selon l'une quelconque des revendications 1 à 5, le corps de compensation (200) présentant une section de maintien (210) qui entoure au moins partiellement la douille d'écartement (310).

7. Siège de véhicule (1) selon l'une quelconque des revendications 1 à 6, le corps de compensation (200) présentant une section d'appui (220) avec un chanfrein (270) .

8. Siège de véhicule (1) selon l'une quelconque des revendications 1 à 7, au moins une nervure (230) étant prévue sur une surface du corps de compensation (200) orientée en direction du segment denté (18).

9. Siège de véhicule (1) selon les revendications 7 et 8, l'au moins une nervure (230) s'étendant sur la section d'appui (220) et le chanfrein (270).

10. Siège de véhicule (1) selon la revendication 8 ou 9, l'au moins une nervure (230) reposant sans jeu sur un côté arrière espacé d'une denture du segment denté (18) à l'état monté.

11. Siège de véhicule (1) selon l'une quelconque des revendications 1 à 10, le corps de compensation (200) étant fabriqué en une matière plastique.

12. Siège de véhicule (1) selon l'une quelconque des revendications 1 à 11, le pignon (26) de l'entraînement (20) étant guidé à travers une ouverture (110) de la partie latérale (100) en formant une fente (420).

13. Siège de véhicule (1) selon l'une quelconque des revendications 1 à 12, la partie latérale (100) présentant un alésage traversant (120) et deux trous oblongs (130).

14. Siège de véhicule (1) selon la revendication 13, l'entraînement (20) étant monté sans jeu dans l'alésage traversant (120) au moyen d'un boulon fileté (18a) et dans l'un des deux trous oblongs (130) de la partie latérale (100) au moyen de deux autres boulons filetés (18b, 180).

15. Siège de véhicule (1) selon l'une quelconque des revendications 1 à 14, l'entraînement (20) présentant un engrenage pas à pas (203) ou un motoréducteur (20h).
